# EUROPEAN PATENT APPLICATION

(11) **EP 1 619 427 A1**
(43) Date of publication of application: **25.01.2006**
(21) Application number: 05015411.1
(22) Date of filing: 15.07.2005
(51) Int. Cl.: F16J 15/10, C09K 3/10, D21H 13/26

(54) **Gasket sheet and method for manufacturing same**

(30) Priority: 20.07.2004 JP 2004211462
(71) Applicant: NICHIAS CORPORATION, Tokyo 105-8555 (JP)
(72) Inventor: Itoi, Katsutoyo Nichias Corporation, Hamamatsu-shi Shizuoka 431-2103 (JP); Saito, Hiroshi Nichias Corporation, Hamamatsu-shi Shizuoka 431-2103 (JP)
(74) Representative: Herzog, Martin

(57) **Abstract**

A non-asbestos gasket sheet comprising 30% or more of the organic fiber obtained by forming a sheet from a slurry containing an organic fiber, a rubber, fillers, and rubber chemicals, followed by drying and rolling. The obtained gasket sheet possesses excellent sealing properties and tensile strength.

## Description

### Technical Field

The present invention relates to a non-asbestos gasket sheet (hereinafter referred to as "NA gasket sheet") used in a wide variety of fields such as petrochemical plants, various industrial mechanical apparatuses, vehicles, marine vessels, and household appliances and to a method for manufacturing the same.

### Background Art

A joint sheet is manufactured by sufficiently mixing a base material fiber, fillers, rubber chemicals, and rubber dissolved in a solvent using Henschel mixer or the like to prepare a raw material mixture composition, feeding the composition to a pair of calender rollers consisting of a hot roller heated to about 150°C and a cold roller maintained at about 20°C to produce a laminate of the composition on the hot roller side, while vaporizing the solvent and vulcanizing the rubber, and removing a sheet that has grown to a predetermined thickness from the hot roller.

Asbestos joint sheets using asbestos as a base fiber material have been widely used. Due to advantages of the form peculiar to asbestos and the outstanding heat resistance of asbestos, the asbestos joint sheets formed by a punching process have been used as joints for pipes and gaskets for apparatuses in which water, oil, air, steam, and the like flow. An asbestos joint sheet containing 65-85 wt% of asbestos is a very flexible fibrillated material even though being an inorganic substance. Since asbestos fibers are sufficiently distributed in entangled conditions, the joint sheets have a large tensile strength, are flexible, and can exhibit elasticity due to the entanglement of asbestos fibers even if rubbers are deteriorated after heating. For these reasons, the asbestos joint sheets can constantly maintain the sealing properties for a long period of time without a decrease in the clamping stress. However, since there is a concern about exhaustion of asbestos which is a natural mineral, an asbestos-free joint sheet containing no asbestos or a non-asbestos joint sheet (NA joint sheet) containing either an inorganic fiber other than asbestos or an organic fiber, or both an inorganic fiber and organic fiber is used.

Japanese Patent Application Laid-open No. 2001-262126 discloses a joint sheet obtained by feeding a blend of a base fiber other than asbestos, rubber, fillers, and rubber chemicals between a hot roller and a cold roller and laminating a sheet-like material on the hot roller side. The joint sheet contains 40 wt% or more of fillers with a particle size of 5-15 µm. This joint sheet has high tensile strength, good compressibility, and good flexibility.

Japanese Patent Application Laid-open No. 2001-1726116 discloses a joint sheet obtained by feeding a blend of a base fiber other than asbestos, rubber, fillers, and rubber chemicals between a hot roller and a cold roller and laminating a sheet-like material on the hot roller side. The joint sheet contains polytetrafluoroethylene resin fiber. This NA joint sheet is free from the phenomenon in which a mixed material adheres to the cold roller side during the manufacturing process and can maintain flexibility to the extent that the clamping force can be increased even if the joint sheet is used in a high temperature atmosphere.

However, the base fiber materials used in the conventional joint sheet are organic fiber or inorganic fiber other than asbestos. These fibers are hard and inflexible as compared with asbestos. If added in an amount of 50-85%, the same amount as allowed to asbestos, such an inorganic or organic fiber produces an irregular surface in the process of laminating the raw material on a hot roller side using a calender roller, resulting in an imbalanced load on the material. This may cause the material to dropout from the roller, making it impossible to manufacture a sheet. For this reason, the base fiber material in an amount as large as asbestos cannot be blended, resulting in a sheet with significantly decreased tensile strength as compared with an asbestos joint sheet.

An object of the present invention is therefore to solve the above problems of the prior art and to provide an NA gasket sheet having outstanding sealing properties and exhibiting tensile strength equal to that of an asbestos joint sheet.

### Disclosure of the Invention

As a result of extensive studies in view of this situation, the inventors of the present invention have found that a gasket sheet prepared by forming a sheet from a slurry containing an organic fiber, a rubber, a filler, and a rubber chemical, followed by drying and rolling, can contain a large amount of an organic fiber, exhibits outstanding sealing properties, and has a tensile strength equivalent to an asbestos joint sheet. This finding has led to the completion of the present invention.

Specifically, the present invention provides a gasket sheet obtained by forming a sheet from a slurry containing an organic fiber, a rubber, a filler, and a rubber chemical, followed by drying and rolling, wherein the gasket sheet contains 30 wt% or more of the organic fiber.

Furthermore, the present invention provides a method for manufacturing a gasket sheet by forming a sheet from a slurry containing an organic fiber, a rubber, a filler, and a rubber chemical, followed by drying and rolling.

The gasket sheet of the present invention can contain a large amount of organic fibers since it is manufactured by a paper making technique. In addition, a sheet material with a smooth surface can be prepared by rolling a sheet between a pair of rollers without producing irregularities. Therefore, the sheet material of the present invention has excellent sealing properties and, at the same time, exhibits tensile strength equivalent to an asbestos joint sheet.

### Detailed Description

The gasket sheet of the present invention can be obtained by forming a sheet from a slurry containing an organic fiber, a rubber, a filler, and a rubber chemical, and drying and rolling the sheet. The content of the organic fiber in the gasket sheet of the present invention is 30 wt% or more, preferably 30-85 wt%, and still more preferably 35-50 wt%. If the content of the organic fiber functioning as a base fiber in the gasket sheet is less than 30 wt%, it is difficult to obtain a gasket sheet with excellent tensile strength. A large amount is undesirable because a large organic fiber content decreases the amount of the other effective components such as rubber, fillers, and rubber chemicals.

There are no specific limitations to the organic fiber used in the gasket sheet of the present invention. For example, aromatic-polyamide fiber, polyamide fiber, poly(p-phenylene benzobisoxazole) (PBO fiber), polyolefin fiber, polyester fiber, polyacrylonitrile fiber, polyvinyl alcohol fiber, polyvinyl chloride fiber, polyurea fiber, polyurethane fiber, polyfluorocarbon fiber, phenol fiber, cellulosic fiber, and the like can be mentioned. Of these, aromatic-polyamide fiber and poly(p-phenylene benzobisoxazole) (PBO fiber) are preferable due to their high temperature resistance. These organic fibers may be used either individually or in combination of two or more. The organic fibers may be used in combination with two or more inorganic fibers such as carbon fiber, glass fiber, and rock wool.

As examples of the rubber used in the gasket sheet of the present invention, acryl-nitrile butadiene rubber, hydrogenated acryl-nitrile butadiene rubber, acryl rubber, acryl-nitrile rubber, ethylene-propylene rubber, styrene-butadiene rubber, chloroprene rubber, butadiene rubber, butyl rubber, fluororubber, silicone rubber, fluruorosilicone rubber, chlorosulfonated rubber, ethylene-vinyl acetate rubber, chlorinated polyethylene, chlorinated butyl rubber, epichlorohydrin rubber, nitrile-isoprene rubber, natural rubber, isoprene rubber, and the like. Of these, the acryl-nitrile butadiene rubber is preferable because of the high oil resistance. These rubbers may be used either individually or in combination of two or more. The amount of rubber in the gasket sheet is preferably 10-40 wt%.

As the fillers used for the gasket sheet of the present invention, kaolin clay, talc, silica, barium sulfate, sodium bicarbonate, mica, graphite, sericite, wollastonite, white carbon, sintered clay, aluminium hydroxide, magnesium hydroxide, glass beads, and the like can be given. The amount of the fillers to be added to the gasket sheet is preferably 5-30 wt%.

As the rubber chemicals used in the gasket sheet of the present invention, known rubber additives conventionally used in rubbers such as a vulcanizing agent, vulcanization accelerator, antioxidant, antiscorching agent, plasticizer, coloring agent, and the like can be given. As the vulcanizing agent, sulfur, zinc oxide, magnesium oxide, peroxide, dinitrobenzene, and the like can be given. As the vulcanization accelerator, polyamine compounds, aldehyde amine compounds, thiuram compounds, dithiocarbamic acid salts, sulfene-amide compounds, thiazole compounds, guanidine compounds, thiourea compounds, xanthogenic acid compounds, and the like can be given.

As the method for obtaining the gasket sheet of the present invention, a method of forming a sheet from a slurry containing an organic fiber, a rubber, a filler, and a rubber chemical, and drying and rolling the resulting sheet, can be given. Although there are no specific limitations to the order of addition of the raw materials in the process for manufacturing the slurry, a method of first charging an organic fiber and water to a refiner in order to prepare a first slurry in which the organic fiber is homogeneously dispersed is preferable to ensure homogeneous dispersion of a large amount of organic fiber in the gasket sheet. A rubber, filler, rubber chemical, and coagulant are then added to obtain slurry. The slurry is applied to a known paper making machine to obtain a sheet with a thickness of 3.0 mm, for example. For example, the inorganic fiber is used together with the organic fiber, a slurry in which the inorganic fiber is dispersed is separately prepared and mixed with the first slurry. A filler may be added to the inorganic fiber-dispersed slurry. Although not specifically limited, a cylinder paper machine, a fourdrinier paper machine, and the like can be used, for example. The cylinder paper machine is preferable due to high yield.

The sheet is dried and rolled. A sheet with a thickness of 3.0 mm is rollered to a thickness of 1.5 mm, for example. There are no specific limitations to the rolling method. A method of passing the sheet between a pair of hot rollers (hot rolling) and a method of using a press machine can be given, for example. The method of passing the sheet between a pair of hot rollers (hot rolling) is more preferable in view of high productivity. As a specific method of hot rolling, a method of passing a dry sheet through a space between a pair of hot roller at 100-120°C to roller with a prescribed linear load can be given, for example. The resulting sheet material removed from the hot rollers may be subjected to second vulcanization in an autoclave to advance vulcanization.

The gasket sheet obtained in this method has homogeneously dispersed entangled organic fibers in the sheet and has no irregularities on the surface. Therefore, even though the organic fiber has a larger fiber diameter and is more inflexible as compared with asbestos, the gasket sheet has excellent sealing properties and, in addition, exhibits tensile strength equivalent to an asbestos joint sheet. For this reason, the gasket sheet can prevent leakage of inner fluids for a long time.

The gasket sheet of the present invention has a tensile strength of 20-50 MPa and flexibility of 10-15. The gasket sheet of the present invention is used in flanges with or without a paste applied thereto as a gasket base material used in a variety of fields such as petrochemical plants, various industrial mechanical apparatuses, vehicles, marine vessels, and household appliances.

### Examples

The present invention will be described in more detail by examples, which should not be construed as limiting the present invention.

### Example 1

An organic fiber and water were processed in a refiner to prepare a first slurry with the organic fiber sufficiently dispersed therein. The remaining materials, i.e. a rubber, fillers, and rubber chemicals were added to the first slurry to obtain a slurry raw material. Next, a sheet with a thickness of 3.0 mm is prepared using a cylinder paper machine, dried for one hour at 100°C, caused to pass through a pair of hot rollers at 100°C and a load of linear pressure of 100 kgf/cm or more, thereby obtaining a sheet with a thickness of 1.5 mm. The sheet was vulcanized at 150°C for 30 minutes to obtain an NA gasket sheet with a thickness of 1.5 mm. The amount of each component added to the slurry was adjusted to obtain the composition of the components in the finished NA gasket sheet shown in Table 1. The unit for the values shown in Table 1 is "wt%". The tensile strength and seal properties of the resulting NA sheet were evaluated. The tensile strength was measured according to the test standard of JIS R3453 joint sheet. In measuring the sealing property, the NA gasket sheet was clamped with JIS 10K25A flanges and nitrogen gas pressure of 1.0 MPa was applied for 10 minutes. Bubbles in water in 10 minutes were collected to measure leakage per one minute. The results are shown in Table 2.

### Example 2

The experiment was carried out in the same method as in Example 1, except that the amounts of the components were changed as shown in Table 1. The results are shown in Table 2.

### Comparative Example 1

A raw material mixture was prepared by mixing the organic fibers, rubber, rubber chemicals, and fillers at a proportion shown in Table 1 for 20 minutes using a Henschel mixer at a low-speed rotation. The obtained mixture was fed between a hot rollerer heated to 150°C and a cold rollerer maintained at 20°C. The raw material was laminated on the hot rollerer side while vulcanizing under pressure to obtain an NA joint sheet with a thickness of 1.5 mm. The tensile strength and seal properties of the resulting NA joint sheet were evaluated in the same method as in Example 1. The results are shown in Table 2.

### Comparative Example 2

An NA joint sheet with a thickness of 1.5 mm was prepared in the same method as in Comparative Example 1 except for using raw materials with a composition shown in the column of Comparative Example 1 in Table 1. The results are shown in Table 2.

### Comparative Example 3

An NA joint sheet with a thickness of 1.5 mm was prepared in the same method as in Comparative Example 1 except for using raw materials with a composition shown in the column of Comparative Example 3 in Table 1. The results are shown in Table 2.

**Table 1**

| (Unit: Wt%) | | Example | | Comparative Example | | |
|---|---|---|---|---|---|---|
| | | 1 | 2 | 1 | 2 | 3 |
| Base material fiber | Aromatic-polyamide fiber | 30 | 50 | 30 | 20 | 62 |
| | Asbestos | - | - | - | - | - |
| Rubber | NBR | 30 | 30 | 30 | 10 | 15 |
| Rubber chemical | | 15 | 15 | 15 | 5 | 8 |
| Filler | Kaolin clay | 25 | 5 | 25 | 65 | 15 |
| Total | | 100 | 100 | 100 | 100 | 100 |

**Table 2**

| | Example | | Comparative Example | | |
|---|---|---|---|---|---|
| | 1 | 2 | 1 | 2 | 3 |
| Tensile strength (MPa) | 30 | 45 | 25 | 14 | 30 |
| Sealing properties (cm³/min) | 0.01 | 0.01 | 1 | 0.01 | 0.01 |

As clear from Table 2, the NA sheet gasket of Examples 1 and 2 had a tensile strength equivalent to or higher than that of the NA joint sheet of Comparative Example 3 in which asbestos fiber was used. Their sealing properties were excellent. The NA joint sheet of Comparative Example 1 exhibited excellent tensile strength, but the sealing properties were poor due to irregular surface. The NA joint sheet of Comparative Example 2 exhibited good sealing properties, but had a tensile strength equal to or less than half of the tensile strength of the NA joint sheet of Comparative Example 3.

## Claims

1. A gasket sheet obtained by forming a sheet from a slurry containing an organic fibers, a rubber, a filler, and a rubber chemical, followed by drying and rolling, wherein the gasket sheet contains 30 wt% or more of the organic fiber.

2. The gasket sheet according to claim 1, wherein the organic fiber is an aromatic-polyamide fiber.

3. A method for manufacturing a gasket sheet, comprising forming a sheet from a slurry containing an organic fiber, a rubber, a filler, and a rubber chemical, followed by drying and rolling.

4. The method for manufacturing a gasket sheet according to claim 3, wherein the slurry is prepared by preparing a first slurry comprising water and an organic fiber and adding rubber, filler, or rubber chemical to the first slurry.

5. The method for manufacturing a gasket sheet according to claim 3 or 4, wherein the obtained gasket sheet comprises 30% or more of the organic fiber.
